# EUROPEAN PATENT APPLICATION

(11) **EP 3 640 211 A1**
(43) Date of publication of application: **22.04.2020**
(21) Application number: 19203652.3
(22) Date of filing: 16.10.2019
(51) Int. Cl.: C01F 7/22, C01F 7/30

(54) **A METHOD FOR THE PREPARATION OF ALUMINA**

(30) Priority: 16.10.2018 AU 2018903911
(71) Applicant: Altech Chemicals Australia Pty Ltd., Subiaco WA 6008 (AU)
(72) Inventor: Kim Seng Tan, Ignatius, Churchlands, Western Australia 6018 (AU); Liu, Jingyuan, Dalkeith, Western Australia 6009 (AU)
(74) Representative: dompatent von Kreisler Selting Werner - Partnerschaft von Patent- und Rechtsanwälten mbB

(57) **Abstract**

A method for the preparation of alumina, the method comprising the steps of:
treating aluminous material to reduce particle size and increase the alumina content;
calcining the aluminous material;
leaching the aluminous material with hydrochloric acid;
solid liquid separation to provide a pregnant liquor;
crystallising aluminium chloride hexahydrate by evaporating water from the pregnant liquor and separating the aluminium chloride hexahydrate
dissolving the aluminium chloride hexahydrate in water and repeating the crystallisation process by evaporation at least once; and
calcining aluminium chloride hexahydrate to provide alumina.

## Description

### TECHNICAL FIELD

The present invention relates to a method for the preparation of alumina.

### BACKGROUND ART

The following discussion of the background art is intended to facilitate an understanding of the present invention only. The discussion is not an acknowledgement or admission that any of the material referred to is or was part of the common general knowledge as at the priority date of the application.

There are a number of industrial methods for producing high purity alumina. One the most common methods is hydrolysis of aluminium alkoxide. In this process, high purity aluminium alkoxide is synthesised from aluminium metal and alcohol, and aluminium hydroxide is produced by hydrolysis of alkoxide, and finally high purity alumina is obtained by calcination. Choline hydrolysis of aluminium is another common method which involves the dissolution of aluminium powder to a hydroxide and then subsequent calcination to convert it back to an alumina (Al₂O₃) form. Both of the processes described above utilise pure aluminium metal as a feedstock.

### SUMMARY OF INVENTION

In accordance with the present invention, there is provided a method for the preparation of alumina, the method comprising the steps of:
treating aluminous material to reduce particle size and increase the alumina content;
calcining the aluminous material;
leaching the aluminous material with hydrochloric acid;
solid liquid separation to provide a pregnant liquor;
crystallising aluminium chloride hexahydrate by evaporating water from the pregnant liquor and separating the aluminium chloride hexahydrate;
dissolving the aluminium chloride hexahydrate in water and repeating the crystallisation process by evaporation at least once; and
calcining aluminium chloride hexahydrate to provide alumina.

Advantageously, the method of the present invention can be used to provide high purity alumina. Preferably, the alumina is 99.99 %.

The step of evaporating water from the pregnant liquor may further comprise evaporating hydrogen chloride form the pregnant liquor.

Preferably, the crystallisation process is conducted three times. For clarity, this would mean the following steps:
evaporating water from the pregnant liquor and precipitating aluminium chloride hexahydrate;
dissolving the aluminium chloride hexahydrate in water to form a pregnant liquor;
evaporating water from the pregnant liquor and precipitating aluminium chloride hexahydrate;
dissolving the aluminium chloride hexahydrate in water;
evaporating water from the pregnant liquor and precipitating aluminium chloride hexahydrate.

Preferably, the aluminous material is an aluminous clay. More preferably, the aluminous material is kaolin. More preferably still, the kaolin is sourced from the Meckering area of Western Australia.

Where the aluminous material is kaolin, the step of:
calcining the aluminous material;
advantageously forms metakaolin.

Preferably, the aluminous material contains less than 1.5 % iron.

Preferably, the step of:
treating aluminous material to reduce particle size and increase the alumina content;
comprises drum scrubbing the aluminous material in water.

Preferably, the step of:
treating aluminous material to reduce particle size and increase the alumina content;
further comprises screening the aluminous material to less than 0.3 mm particle size.

Advantageously, screening of the aluminous material removes significant portions of quartz material, thereby increasing the wt% of aluminium in the material.

Preferably, the step of:
treating aluminous material to reduce particle size and increase the alumina content;
increases the alumina content to over about 27 % w/w.

Preferably, the step of:
screening the aluminous material to less than 0.3 mm particle size;
further comprises solid liquid separation of the screened aluminous material.

Preferably, the step of:
calcining the aluminous material;
is conducted at a temperature of about 400 - 700 °C.

Preferably, the step of:
calcining the aluminous material;
is conducted for a period of 15 to 60 minutes.

Preferably, the step of:
calcining the aluminous material;
is conducted for a period of about 15 minutes.

Preferably, the step of:
calcining the aluminous material;
is conducted in a natural gas fired rotary kiln.

Preferably, the step of calcining the aluminous material,
is preceded by the step of flash drying the aluminous material remove at least a portion of the moisture in the aluminous material.

Preferably, the method of the present invention comprises the further step of:
cooling the aluminous material to a temperature of about 80 °C after the step of:
calcining the aluminous material;

Advantageously, the hydrochloric acid dissolves the aluminium present and facilitates its separation from any remaining silica. The leachate may contain other impurities such as iron, titanium, sodium and potassium.

It will be appreciated that the concentration of the hydrochloric acid will depend on the type of acid itself as well as the nature of the aluminous material including particle size distribution and level of impurities. Preferably, the hydrochloric acid has a concentration of between 1 M and 9 M. More preferably, the hydrochloric acid has a concentration of between 3 M and 9 M. More preferably, the hydrochloric acid has a concentration of between 6 M and 9 M. More preferably, the hydrochloric acid has a concentration of about 9 M. It will be appreciated that the volume of hydrochloric acid will depend on the nature of the aluminous material including particle size distribution and level of impurities. Preferably the addition of the hydrochloric acid forms a mixture with a solid:liquid ratio of between 20 and 35 %.

The step of:
leaching the aluminous material with hydrochloric acid;
is preferably conducted at a temperature of between 70 °C and 110 °C.

Preferably, the aluminous material is leached for between 15 minutes and 1 hour. More preferably, the aluminous material is leached for about 1 hour.

Without being limited by theory, it is believed that the process of extraction of aluminium from kaolin into an HCl solution is best described by the equation;

Al₂O₃.2SiO₂.2H₂O (s) + 6HCl (aq) → 2AlCl₃ (aq) + 2SiO₂ (s) + 5H₂O

It will be appreciated that the kaolin can be represented in a number of different ways. For the purpose of the present application, the equation detailed above is considered appropriate.

Preferably, the method of the present invention comprises the further step of:
solid/liquid separation of the leached aluminous material.

Preferably the step of:
solid/liquid separation of the leached aluminous material;
comprises pressure filtration of the leached material to provide the pregnant leach solution and residue solids.

Preferably, the method of the present invention comprises the further step of:
passing the pregnant leach solution through a polishing filter to remove undesired small particles.

Preferably, the method of the present invention comprises the further step of:
neutralising the residue solids with a strong base such as limestone, hydrated lime or caustic soda.

In one form of the invention, the step of precipitation of aluminium chloride hexahydrate comprises evaporative crystallisation of the pregnant leach solution to provide aluminium chloride hexahydrate crystals.

Preferably the step of precipitating aluminium chloride hexahydrate comprises evaporating, the pregnant leach solution at a pressure of
60 kPa(Absolute) to atmospheric pressure (101.325 kPa absolute) to provide aluminium chloride hexahydrate crystals.

Preferably, the aluminium chloride hexahydrate crystals are filtered and washed with hydrochloric acid or pure water. The filtrate may be recycled to the evaporator for further use.

Preferably, the filtered aluminium chloride hexahydrate crystals are dissolved in water to provide a solution of aluminium chloride hexahydrate. Preferably, the water is ultrapure water.

Preferably, the method of the present invention comprises the additional step of:
hydro-pyrolysing the aluminium chloride hexahydrate crystals prior to the step of:
calcining aluminium chloride hexahydrate to provide alumina.

Advantageously, the step of hydro-pyrolysing the aluminium chloride hexahydrate crystals removes physically bound hydrogen chloride and water as a gas.

Preferably, the step of calcining the aluminium chloride hexahydrate crystals comprises calcining at about 1100 °C to 1300 °C in a natural gas fired rotary kiln.

The method of the present invention may comprise the additional step of washing the alumina with a dilute weak clean acid and/or ultrapure water.

The method of the present invention may comprise the additional step of micronising the alumina to less than 10 micron in particle diameter.

The method of the present invention may comprise the additional step of pelletising the alumina to a pellet size of about 2 - 5 mm. Preferably, the pellet size is about 2 mm.

The method of the present invention may comprise the calcination of the alumina pellets at a temperature of about 1650 °C to achieve bulk density of greater than 2,200 kg/m³.

### BRIEF DESCRIPTION OF THE DRAWINGS

The present invention will now be described, by way of example only, with reference to one embodiment thereof, and the accompanying drawing, in which:-
Figure 1 is a schematic flow sheet depicting a process for the production of alumina in accordance with an embodiment of the invention;

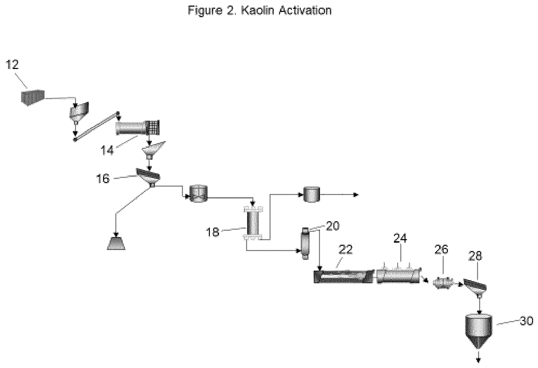

Figure 2 is a detailed schematic flow sheet depicting the kaolin activation portion of the process for the production of alumina in accordance with an embodiment of the invention;

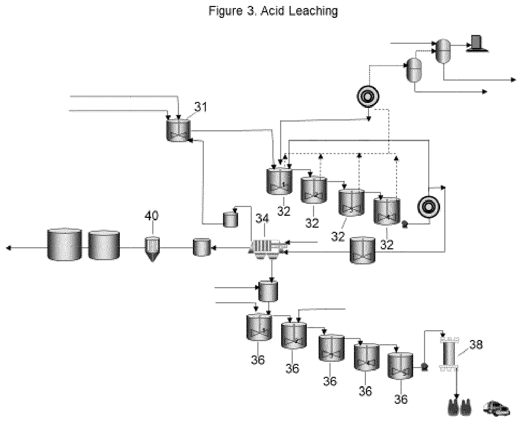

Figure 3 is a detailed schematic flow sheet depicting the acid leaching portion of the process for the production of alumina in accordance with an embodiment of the invention;

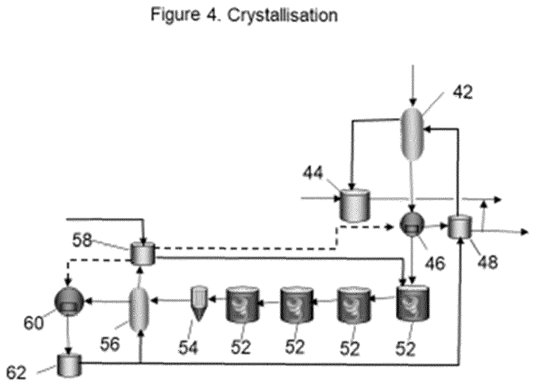

Figure 4 is a detailed schematic flow sheet depicting the crystaliisation portion of the process for the production of alumina in accordance with an embodiment of the invention; and

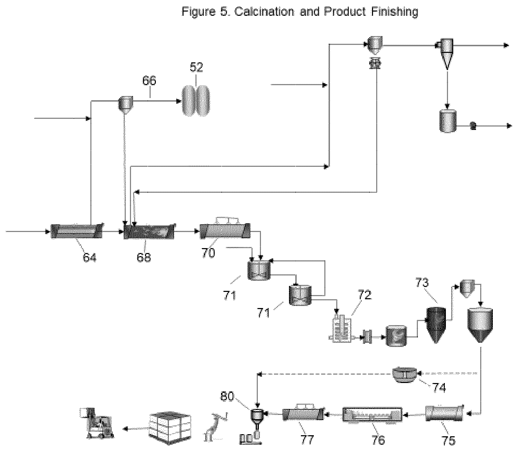

Figure 5 is a detailed schematic flow sheet depicting the calcination and product finishing portion of the process for the production of alumina in accordance with an embodiment of the invention.

### DESCRIPTION OF EMBODIMENTS

Those skilled in the art will appreciate that the invention described herein is susceptible to variations and modifications other than those specifically described. It is to be understood that the invention includes all such variations and modifications. The invention also includes all of the steps, features, compositions and compounds referred to or indicated in the specification, individually or collectively and any and all combinations or any two or more of the steps or features.

The present invention is not to be limited in scope by the specific embodiments described herein, which are intended for the purpose of exemplification only. Functionally equivalent products, compositions and methods are clearly within the scope of the invention as described herein.

The entire disclosures of all publications (including patents, patent applications, journal articles, laboratory manuals, books, or other documents) cited herein are hereby incorporated by reference.

Throughout this specification, unless the context requires otherwise, the word "comprise" or variations such as "comprises" or "comprising", will be understood to imply the inclusion of a stated integer or group of integers but not the exclusion of any other integer or group of integers.

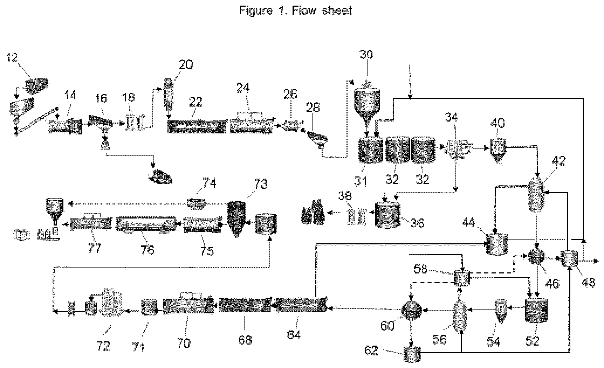

In Figure 1 there is shown a process 10 for the production of high purity alumina. All of the unit operations in the process 10 are designed to operate continuously with full process instrumentation and control being provided for.

Run-of-mine (ROM) ore 12 is concentrated to a minimum 27 % aluminium as alumina by means of physical methods such as drum scrubbing 14 the ore to separate aluminous and gangue material and screening 16 to obtain particle sizes less than about 0.3 mm. The beneficiated ore having at least 27 % alumina is pressure filtered 18 to form a filter cake.

The aluminous ore filter cake is dried in a flash drying column 20 from where it is transferred for calcination in a natural gas fired kiln 22 operating at 700 °C for a residence time of 15 minutes to 60 minutes, more preferably 60 minutes.

The calcined aluminous ore is cooled to about 80 °C by means of indirect water assisted cooling system 24.

The cooled calcined aluminous ore is crushed/milled 26 to less than 300 µm and screened 28 again to remove any oversize particles. The ore is stored in a calcined storage area 30 before subsequent leaching.

The ground calcined ore is leached with hydrochloric acid 31 of at least 20 % strength at 100 to 105 °C in a series of acid leach vessels 32 for 30 minutes to 2 hours, preferably 1 hour to provide a leach slurry. Preferably, there are provided four leach vessels and the residence time in each vessel is about 15 minutes.

The leached slurry is cooled to 80 °C and transferred to a series pressure filters 34 where the pregnant leach solution is separated from the solid residue. Preferably, there are provided three pressure filters. The residue solids are neutralised in neutralisation tanks 36 using quicklime, hydrated lime or limestone or such similar alkaline media. The neutralised solid residues are filtered 38 and disposed of accordingly.

The pregnant leach solution from the pressure filters 34 is sent to a polishing filter 40 to remove any suspended solid particles and provide a clean pregnant leach solution. Preferably, there are provided two polishing filters. The pregnant leach solution from the polishing filter 40 not only contains the desired aluminium chloride but may also contain other leached impurities such as iron, magnesium, manganese calcium, sodium and potassium.

The polished pregnant leach solution is subjected to evaporative 42 crystallisation to crystallise aluminium chloride hexahydrate crystals. The loss of water by evaporation concentrated the leach solution to saturation point. Further evaporation of water leads to crystallization of aluminium chloride hexahydrate crystals. The operating pressure is controlled at a pressure ranging from 60 to 101.3kPa absolute during evaporation. The majority of the impurities remain in solution.

The slurry containing 20-35% crystallised aluminium chloride hexahydrate crystals from the crystallization process is centrifuged 46 to separate the crystals from the liquor. The aluminium chloride hexahydrate crystals are washed by water or hydrochloric acid in the centrifuge 46. The liquor from the centrifuge is collected in a liquor tank 48 from where some is recycled back to crystallisor for further crystallization, and some recycle to the leach, and some to bleed to control the impurities level in the crystalliser.

The vapor from the crystallizer 42 is condensed with the HCl gas from ACH roaster 64 in HCl plant 44, where the HCl is condensed and purified and return to leach 31.

The aluminium chloride hexahydrate crystals are re-dissolved in ultrapure water to provide a saturatedsolution of aluminium chloride (approximately 27 %) 52. The aluminium chloride solution is filtered through a polishing filter 54 to remove any solid impurities of undissolved crystals.

The purified aluminium chloride solution at 60 °C is passed through a second evaporative crystallisation stage 56. The evaporation of water leads to crystallization of aluminium chloride hexahydrate crystals. The operating pressure is controlled in a range of 60-101.3kPa absolute. The majority of the impurities remain in solution. The slurry containing crystallise aluminium chloride hexahydrate crystals and liquor from the crystallization process 56 is centrifuged 60 to separate the crystals from the liquor. The aluminium chloride hexahydrate crystals are washed by water or hydrochloric acid in the centrifuge 60. The liquor from the centrifuge is collected in a liquor tank 62, from where some is recycled back to crystallisor for further crystallization, and some recycle to liquor tank 48.

The crystallised aluminium chloride hexahydrate crystals from the above evaporative crystallizer can be purified again in many steps in a same way as described above.

The aluminium chloride hexahydrate crystals thus obtained are high purity aluminium chloride hexahydrate crystals having purity of 99.99 to 99.999%.

The purified aluminium chloride hexahydrate crystals are subjected to calcining at 700 °C in a natural gas fired rotary kiln 64 . Aluminium chloride hexahydrate decomposes at this temperature to yield a mixture of aluminium hydroxide and aluminium oxide releasing hydrogen chloride vapour and steam. The hydrogen chloride vapour is recycled to a hydrogen chloride recovery plant 44.

The mixture of aluminium hydroxide and aluminium oxide obtained through the first calcining process is subjected to high temperature calcination at 1100 °C to 1300 °C 68 to remove residual water and hydrogen chloride and transform to alpha high purity alumina.

High purity alumina is cooled to room temperature 70 and washed in a weak clean acid or ultra pure water in two stage counter current washing tanks 71 for about 60 minutes to reduce sodium and potassium and other contaminents and to yield a high purity alumina slurry.

High purity alumina slurry is milled in a series of bead mills 72 filled with high purity alumina beads to reduce the alumina particle size to less than 1 micron, preferably D50=0.5 microns.

Milled slurry is then dried in a spray dryer 73 to remove moisture and yield high purity alumina having purity of 99.99%.

High purity alumina thus obtained having purity 99.99 % may be air milled using a jet mill 74 to the required particle size as per specifications from customer, preferably <1 µm.

Alternatively, high purity alumina thus obtained having purity 99.99 % may be pelletised by addition of ultra pure water in a pelletiser drum 75 to a pellet size of 2-5mm. Preferrably the pellet size is 2 mm.

High purity alumina pellets are then calcined in a natural gas fired or electrical heated tunnel kiln 76 at a temperature of about 1650 °C to increase the bulk density of the final alumina product. Calcined pellets are then passed through a cooling section 77 on the discharge of the tunnel kiln to reduce the pellet temperature to below 60 °C.

Milled or pelletised high purity alumina (HPA) is then packaged 80 in air tight paper bags with polyethylene lining of required content.

## Claims

1. A method for the preparation of alumina, the method comprising the steps of:
treating aluminous material to reduce particle size and increase the alumina content;
calcining the aluminous material;
leaching the aluminous material with hydrochloric acid;
solid liquid separation to provide a pregnant liquor;
crystallising aluminium chloride hexahydrate by evaporating water from the pregnant liquor and separating the aluminium chloride hexahydrate
dissolving the aluminium chloride hexahydrate in water and repeating the crystallisation process by evaporation at least once; and
calcining aluminium chloride hexahydrate to provide alumina.

2. A method for the preparation of alumina according to claim 1, wherein the step of evaporating water from the pregnant liquor further comprise evaporating hydrogen chloride from the pregnant liquor.

3. A method for the preparation of alumina according to claim 1 or claim 2, wherein the crystallisation process is conducted three times.

4. A method for the preparation of alumina according to any one of the preceding claims, wherein the aluminous material is an aluminous clay and/or wherein the aluminous material is kaolin.

5. A method for the preparation of alumina according to any one of the preceding claims, wherein the step of treating aluminous material to reduce particle size and increase the alumina content comprises drum scrubbing the aluminous material in water.

6. A method for the preparation of alumina according to any one of the preceding claims, wherein the step of treating aluminous material to reduce particle size and increase the alumina content comprises screening the aluminous material to less than 0.3 mm particle size.

7. A method for the preparation of alumina according to any one of the preceding claims, wherein the step of calcining the aluminous material is conducted at a temperature of about 400 - 700 °C and/or wherein the step of calcining the aluminous material is conducted for a period of 15 to 60 minutes.

8. A method for the preparation of alumina according to any one of the preceding claims, wherein
a. the step of calcining the aluminous material is preceded by the step of flash drying the aluminous material remove at least a portion of the moisture in the aluminous material and/or
b. the method comprises the further step of cooling the aluminous material to a temperature of about 80 °C after the step of calcining the aluminous material and/or
c. the hydrochloric acid has a concentration of between 1 M and 9 M, preferably wherein the hydrochloric acid has a concentration of about 9 M and/or
d. wherein the addition of the hydrochloric acid forms a mixture with a solid:liquid ratio of between 20 and 35 %.

9. A method for the preparation of alumina according to any one of the preceding claims, wherein the step of leaching the aluminous material with hydrochloric acid is conducted at a temperature of between 70 °C and 110 °C and/or wherein the aluminous material is leached for between 15 minutes and 1 hour.

10. A method for the preparation of alumina according to any one of the preceding claims, wherein the step of solid/liquid separation of the leached aluminous material comprises pressure filtration of the leached material to provide the pregnant leach solution and residue solids.

11. A method for the preparation of alumina according to any one of the preceding claims, wherein the method comprises the further step of passing the pregnant leach solution through a polishing filter to remove undesired small particles.

12. A method for the preparation of alumina according to any one of the preceding claims, wherein the method comprises the further step of neutralising the residue solids with a strong base such as limestone, hydrated lime or caustic soda.

13. A method for the preparation of alumina according to any one of the preceding claims, wherein the aluminium chloride hexahydrate crystals are filtered and washed with hydrochloric acid or pure water.

14. A method for the preparation of alumina according to any one of the preceding claims, wherein the method comprises the further step of hydro-pyrolysing the aluminium chloride hexahydrate crystals prior to the step of calcining aluminium chloride hexahydrate to provide alumina.

15. A method for the preparation of alumina according to any one of the preceding claims, wherein the step of calcining the aluminium chloride hexahydrate crystals comprises calcining at about 1100 °C to 1300 °C in a natural gas fired rotary kiln.
